# EUROPÄISCHE PATENTSCHRIFT

(11) **EP 1 503 114 B1**
(45) Veröffentlichungstag und Bekanntmachung des Hinweises auf die Patenterteilung: **02.08.2006**
(21) Anmeldenummer: 04016046.7
(22) Anmeldetag: 08.07.2004
(51) Int. Cl.: F16J 1/12

(54) **Kolben-Kolbenstangen-Einheit**
Piston-piston rod assembly
Assemblage d'une tige de piston au piston

(30) Priorität: 26.07.2003 DE 10334205
(43) Veröffentlichungstag der Anmeldung: 02.02.2005
(73) Patentinhaber: FESTO AG & Co, 73734 Esslingen (DE)
(72) Erfinder: Kees, Ulrich, 66424 Homburg (DE)
(74) Vertreter: Abel, Martin

(56) Entgegenhaltungen:
- GB-A- 1 117 777
- GB-A- 2 153 967
- US-A- 2 063 724
- US-A- 3 808 956
- US-A- 5 769 192
- US-A- 5 947 001

## Beschreibung

Die Erfindung betrifft eine Kolben-Kolbenstangen-Einheit für ein fluidtechnisches Gerät wie ein Arbeitszylinder oder ein Stoßdämpfer oder dergleichen, wobei der Kolben mit einer zentralen Durchbrechung auf die Kolbenstange aufgesteckt und zwischen zwei axial fest mit der Kolbenstange verbundenen Halteflächen ausschließlich durch diese axial unbeweglich fixiert ist.

Bei einer aus der DE 101 61 801 A1 bekannten Kolben-Kolbenstangen-Einheit dieser Art ist der Kolben auf einen abgestuften Endabschnitt der Kolbenstange aufgesteckt und wird zwischen der Schulter einer Abstufung und einer von der entgegengesetzten Seite her auf die Kolbenstange aufgeschraubten Mutter fest eingespannt. Bedingt durch die gewünschte Gewindefestigkeit sind entsprechend lange Gewindeabschnitte erforderlich, so dass die Befestigungsmaßnahmen verhältnismäßig große axiale Abmessungen aufweisen. Zudem sind ergänzende Sicherungsmaßnahmen vorgesehen, um ein unbeabsichtigtes Lösen der Mutter zu verhindern, deren Realisierung relativ aufwendig ist. So ist beispielsweise vorgesehen, mittels spezieller Umformwerkzeuge eine gezielte Deformation von Gewindeteilen vorzunehmen, die ein Abschrauben der Mutter verhindern. Als weitere mögliche Sicherheitsmaßnahme wird das Anbringen eines Klebers zwischen den Gewinden der Mutter und der Kolbenstange erwähnt, wobei diese Maßnahmen aufgrund der Aushärtezeit des Klebers als sehr zeitaufwendig eingestuft werden. Schließlich wird auch noch angeregt, zwischen der Mutter und dem Gewinde der Kolbenstange einen Schweißpunkt zu setzen, um die Mutter verdrehzusichern. Die zum Erhalt der erforderlichen Festigkeit notwendige Schweißtiefe für den Schweißpunkt führt allerdings zu einem starken lokalen Energieeintrag, der sich auch nachteilig auf die Materialeigenschaften auswirken und unter Umständen auch einen Verzug hervorrufen kann.

Die US 3 808 956 beschreibt eine Kolbenanordnung, bei der ein zu fixierender Kolben auf einen bezüglich der Kolbenstange im Durchmesser reduzierten Zapfen aufgepresst und mittels eines ebenfalls aufgepressten metallischen Halteringes ergänzend fixiert wird, der zur Lagesicherung zusätzlich durch Lichtbogenschweißen mit dem Zapfen verschweißt wird. Bei dem den Kolben tragenden Zapfen handelt es sich um ein bezüglich der Kolbenstange separates Bauteil, das in die Kolbenstange eingesteckt und mit der Kolbenstange verschweißt wird

Aus der US 5 769 192 ist ein Stoßdämpfer bekannt, in dessen Kolben eine ventilfunktion integriert ist. Der Grundkörper des Kolbens ist durch einen genieteten Ringbund der Kolbenstange gehalten. Eine mit diesem Grundkörper axial verspannte Ventilscheibe ist durch einen Ring fixiert, der auf die Kolbenstange aufgesteckt und an dieser durch Laserschweißen befestigt ist.

In der DE 101 41 560 A1 wird ein Arbeitszylinder offenbart, dessen Kolben auf die Kolbenstange aufgesteckt und durch Vernieten oder auch durch Ultraschall- oder Laser-Schweiß-verbindungen direkt mit der Kolbenstange verbunden ist.

Die DE 43 15 458 C2 beschreibt einen Teleskop-Schwingungsdämpfer, dessen Kolben durch eine Nietung auf der Kolbenstange fixiert ist. Um eine Ventilfunktion zu erhalten, ist auf die Kolbenstange zusätzlich eine Ventilscheibe aufgesetzt, die durch eine Hülse gehalten wird, welche durch eine Laserschweißung an der Kolbenstange befestigt ist.

In der DE 40 22 447 C2 wird vorgeschlagen, den Kolben durch eine Schweißverbindung an der Kolbenstange zu befestigen. Dabei wird der Kolben mit der Kolbenstange direkt verschweißt, beispielsweise durch ein Reibschweißverfahren. Vor allem jedoch, wenn es sich bei dem Kolben um ein Mehrkomponentenbauteil handelt, das teilweise aus wärmeempfindlichen Materialien besteht, kann diese Art der Befestigung nicht uneingeschränkt empfohlen werden.

Es ist die Aufgabe der vorliegenden Erfindung, eine Kolben-Kolbenstangen-Einheit zu schaffen, die sich auf einfache Weise mit hoher Festigkeit und bei Bedarf mit kompakten Abmessungen realisieren lässt.

Zur Lösung dieser Aufgabe ist bei einer Kolben-Kolbenstangen-Einheit der eingangs genannten Art vorgesehen, dass wenigstens eine der Halteflächen von einem auf einen einen einstückigen Bestandteil der Kolbenstange bildenden außengewindelosen metallischen Befestigungsabschnitt der Kolbenstange aufgesteckten, innengewindelosen metallischen Haltering gebildet ist, der durch einen zur Kolbenstange konzentrische Laserschweißnaht mit der Kolbenstange verschweißt ist.

Der Kolben wird somit zwischen zwei Halteflächen gehalten, von denen eine oder beide von einem kein Innengewinde aufweisenden metallischen Haltering gebildet sind, der auf einen ebenfalls gewindelosen metallischen Befestigungsabschnitt der Kolbenstange aufgesteckt ist. Zur Fixierung des Halteringes dient eine ringförmige Laserschweißverbindung, die sich mit einer geringen Aufschmelztiefe des Materials realisieren lässt, so dass die Werkstoffeigenschaften nicht beeinträchtigt werden. Zudem ergibt sich durch die Ringform der Schweißnaht eine symmetrische Wärmeeinleitung, die einem Verzug entgegenwirkt. Da der Kolben an der Schweißverbindung nicht beteiligt ist, kann er aus beliebigem Material und insbesondere zumindest teilweise auch aus Kunststoffmaterial gefertigt werden. Da zur Fixierung des Halteringes kein Gewinde erforderlich ist, kann die Baulänge für die Befestigungsmaßnahmen sehr kurz gehalten werden. Insbesondere wenn der Kolben an einem Endabschnitt der Kolbenstange fixiert wird, ergibt sich somit die Möglichkeit eines fast oder ganz bündigen Abschlusses von Kolben, Kolbenstange und Haltering, so dass in dem mit der Kolben-Kolbenstangen-Einheit auszustattenden fluidtechnischen Gerät keine Maßnahmen getroffen werden müssen, um überstehende Befestigungselemente aufzunehmen und mithin ein solches Gerät mit kurzen Längenabmessungen hergestellt werden kann. Durch die Laserschweißverbindung ergibt sich im Vergleich zu einer eventuellen Reibschweißverbindung zudem der Vorteil, dass der jeweilige Haltering axial fest gegen den Kolben andrückbar ist, so dass sich dieser axial unbeweglich einspannen lässt.

Die gegenseitige Befestigung von Komponenten mittels Laserschweißen ist auf dem Sektor der Fluidtechnik zwar als solches bekannt. So beschreibt die DE 35 07 167 A1 eine Kolben-Zylinder-Anordnung, bei der ein Zylinderdeckel durch Laserschweißen am Zylindergehäuse befestigt wird. Bei der Kolben-Kolbenstangen-Einheit wird jedoch weiterhin auf eine Schraubverbindung zwischen dem Kolben und der Kolbenstange zurückgegriffen.

Vorteilhafte Weiterbildungen der Erfindung gehen aus den Unteransprüchen hervor.

Mit der erfindungsgemäßen Befestigungstechnik kann ein Kolben entweder zwischen zwei mit der Kolbenstange verschweißten Halteringen fixiert werden oder auch zwischen lediglich einem angeschweißten Haltering und einer einstückig mit der Kolbenstange ausgebildeten Schulter einer Abstufung. Die Befestigung zwischen zwei Halteringen hat den Vorteil, dass die Kolbenstange am zugeordneten Längenabschnitt keiner gesondert zu fertigenden Abstufung bedarf, was die Herstellungskosten reduziert. Außerdem kann der Kolben auf diese Weise an beliebiger Stelle der Kolbenstange fixiert werden. In Verbindung mit einem Arbeitszylinder, der eine durchgehende Kolbenstange aufweist, kann auf diese Weise der Kolben beispielsweise bis zur Mitte der Kolbenstange aufgeschoben und dort mittels von entgegengesetzten Seiten her angebrachten Halteringen befestigt werden.

Besonders kompakte Längenabmessungen sind möglich, wenn mindestens ein Haltering axial versenkt in einem entsprechend erweiterten Endabschnitt der Durchbrechung des Kolbens aufgenommen wird. Hier kann der Haltering sogar axial außen bündig mit der Stirnfläche des Kolbens abschließen.

Es besteht ferner die vorteilhafte Möglichkeit, mindestens einen Haltering als Verankerungsmittel für einen Pufferkolben auszubilden, der in dem zugeordneten fluidtechnischen Gerät zur Endlagendämpfung herangezogen wird. Der Haltering kann insbesondere so ausgeführt sein, dass der Pufferkolben durch Verrastung daran festlegbar ist.

Bei dem mindestens einen Haltering handelt es sich zweckmäßigerweise um ein aus Metall bestehendes Stanzteil. Der beim Stanzen des Halteringes hervorgerufene Grat an einer Stirnseite des Innenumfanges kann dabei in vorteilhafter Weise bei der Realisierung der Laserschweißnaht verwendet werden. Da beim Laserschweißen von außen her kein Material zugeführt wird, kann der Stanzgrat zumindest einen Teil des Materials der Laserschweißnaht bilden.

Verfügt der Kolben über einen aus Kunststoffmaterial bestehenden Kolbenkörper, wird die Durchbrechung des Kolbens zweckmäßigerweise von einem durch diesen Kolbenkörper umschlossenen metallischen Stützteil definiert, das von entgegengesetzten Seiten her von den beiden kolbenstangenfesten Halteflächen beaufschlagt wird. Eine solche Bauform empfiehlt sich vor allem bei einem als Mehrkomponentenbauteil ausgeführten Kolben. Durch diese Maßnahme erfolgt weiterhin eine starre axiale Abstützung des Kolbens zwischen den Halteflächen.

Das Stützteil ist insbesondere rohrförmig ausgebildet, verfügt jedoch zweckmäßigerweise über mindestens einen formschlüssig in den Kolbenkörper eingreifenden, zweckmäßigerweise ringförmigen Radialvorsprung. Das Stützteil kann von einem zur Bildung eines ringförmigen Radialvorsprunges axial gestauchten Rohrkörper gebildet sein.

Ein Vorteil der Erfindung besteht auch darin, dass das Material des Halteringes auf das Material der bevorzugt insgesamt metallischen Kolbenstange abgestimmt werden kann, um eine optimale Laserschweißverbindung zu erhalten. In der Regel wird es sich als vorteilhaft erweisen, den Metallring aus dem gleichen Metallmaterial herzustellen wie den Befestigungsabschnitt und vorzugsweise die gesamte Kolbenstange. Es kann sich hier beispielsweise jeweils um Edelstahl handeln.

Nachfolgend wird die Erfindung anhand der beiliegenden Zeichnung näher erläutert. In dieser zeigen:
- Figur 1: ein nur teilweise angedeutetes fluidtechnisches Gerät mit einem im Längsschnitt dargestellten Längenabschnitt seiner Kolben-Kolbenstangen-Einheit, wobei die Schnittlinie gemäß Pfeil I-I aus Figur 2 verläuft,
- Figur 2: eine Stirnansicht der Kolben-Kolbenstangen-Einheit aus Figur 1 mit Blickrichtung gemäß Pfeil II,
- Figur 3: eine weitere Ausführungsform der Kolben-Kolbenstangen-Einheit in einer Teildarstellung im Längsschnitt analog Figur 1,
- Figur 4: wiederum eine andere Kolben-Kolbenstangen-Einheit in einer ausschnittsweisen Längsschnittdarstellung,
- Figur 5: eine Modifikation der Kolben-Kolbenstangen-Einheit in einer ausschnittsweisen Längsschnittdarstellung, wobei ein Haltering zur Fixierung eines Pufferkolbens eingesetzt wird, und
- Figur 6: den Vorgang des Aufsteckens eines als Stanzteil ausgebildeten Halteringes auf eine Kolbenstange, wobei ein vor dem Aufstecken vorhandener Stanzgrat des Halteringes ersichtlich ist.

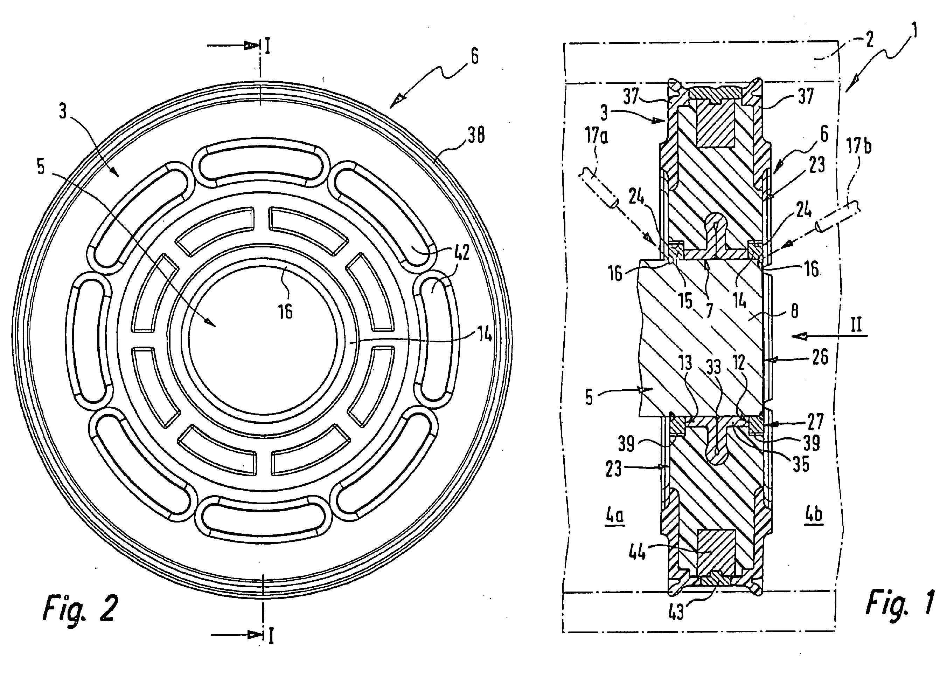

Die Figur 1 zeigt einen teilweise strichpunktierten Ausschnitt eines fluidtechnischen Gerätes 1, bei dem es sich exemplarisch um einen durch Fluidkraft betätigbaren Arbeitszylinder handelt, insbesondere um einen Pneumatikzylinder. Das Gerät 1 verfügt über ein längliches Gehäuse 2, in dem ein Kolben 3 angeordnet ist, der unter Abdichtung zwei Arbeitskammern 4a, 4b voneinander abteilt. Durch gesteuerte Fluidbeaufschlagung der beiden Arbeitskammern 4a, 4b über nicht näher dargestellte Gehäusekanäle lässt sich der Kolben 3 axial verschieben. Die Bewegung des Kolbens kann außerhalb des Gehäuses 2 an einer Kolbenstange 5 abgegriffen werden, die eine oder beide stirnseitigen Abschlusswände des Gehäuses 2 unter Abdichtung durchsetzt und die mit dem Kolben 3 zu einer als Kolben-Kolbenstangen-Einheit 6 bezeichneten Baueinheit zusammengefasst ist. Die Kolbenstange 5 macht also die Bewegung des Kolbens 3 unmittelbar mit.

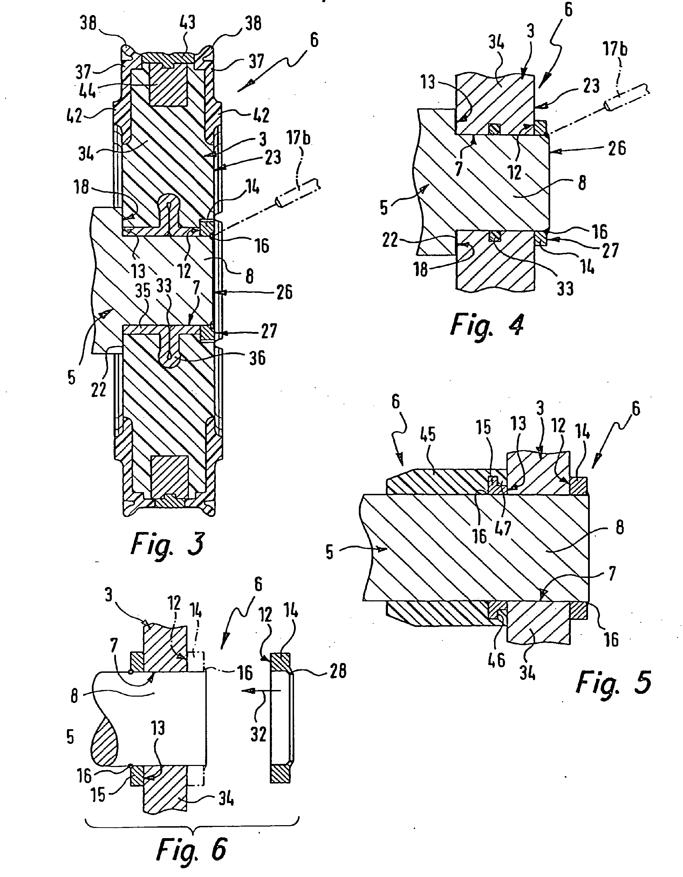

Die Figur 2 zeigt die Kolben-Kolbenstangen-Einheit 6 aus Figur 1 in einer Stirnansicht. Die Figuren 3 bis 6 zeigen alternative Ausführungsformen einer Kolben-Kolbenstangen-Einheit 6, wobei die Figur 6 eine Momentaufnahme des Herstellungsverfahrens ist.

Die Kolben-Kolbenstangen-Einheit 6 kann auch bei anderen fluidtechnischen Geräten Einsatz finden, beispielsweise bei Stoßdämpfern, wo in die Kolbenstange 5 zu dämpfende Stöße eingeleitet werden.

Allen Ausführungsformen gemeinsam ist eine zentrale Durchbrechung 7 des Kolbens 3. Mit dieser ist der Kolben 3 auf einen aus Metall bestehenden Befestigungsabschnitt 8 der Kolbenstange koaxial aufgesteckt. Bevorzugt besteht nicht nur der Befestigungsabschnitt 8, sondern die gesamte Kolbenstange 5 aus Metall, beispielsweise aus Edelstahl oder aus Aluminium.

Der Kolben 3 ist mittels zweier von entgegengesetzten Axialseiten her auf ihn einwirkenden ringförmigen Halteflächen, die axial fest mit der Kolbenstange 5 verbunden sind, axial unbeweglich mit der Kolbenstange 5 verbunden. Diese Haltefläche 12, 13 beaufschlagen den Kolben 3, so dass dieser axial spielfrei festgespannt ist.

Bei den Ausführungsbeispielen der Figuren 1, 2, 5 und 6 sind beide Halteflächen jeweils von einem auf den Befestigungsabschnitt 8 der Kolbenstange aufgesteckten Haltering 14, 15 gebildet, der durch eine zur Kolbenstange 5 konzentrische Laserschweißnaht 16 mit der Kolbenstange 5 verschweißt ist. Die Halteringe 14, 15 verfügen über kein Innengewinde, sondern sind am Innenumfang glattflächig ausgeführt, wobei sie möglichst radial spielfrei auf den Befestigungsabschnitt 8 der Kolbenstange 5 aufgeschoben sind, der seinerseits am Außenumfang glattflächig ausgeführt ist und dort kein Außengewinde besitzt.

Bei der Herstellung der Schweißverbindung wird zweckmäßigerweise zunächst der eine, zweite Haltering 15 bis zur gewünschten Position auf die Kolbenstange 5 axial aufgeschoben, worauf mit einem Laserschweißgerät 17a an der der an dem zweiten Haltering 15 vorgesehenen zweiten Haltefläche 13 entgegengesetzten Axialseite eine um die Kolbenstange 5 konzentrisch umlaufende Laserschweißnaht 16 gesetzt wird. Der zweite Haltering 15 ist dadurch fest mit der Kolbenstange 5 verbunden.

Anschließend wird der Kolben 3 bis zur Anlage an der zweiten Haltefläche 13 auf den Befestigungsabschnitt 8 aufgeschoben und danach wird der erste Haltering 14, mit dem Kolben 3 zugewandter erster Haltefläche 12, auf die Kolbenstange 5 aufgesteckt. Mittels eines nicht näher dargestellten Spannwerkzeuges wird der erste Haltering 14 fest gegen den Kolben 3 gedrückt, der sich dabei an der entgegengesetzten zweiten Haltefläche 13 abstützt. Der Kolben 3 wird somit an seinem zwischen die beiden Halteflächen 12, 13 eingreifenden Abschnitt axial unbeweglich eingespannt. Anschließend wird mit einem Laserschweißgerät 17b die den ersten Haltering 14 mit der Kolbenstange 5 verbindende Laserschweißnaht 16 angebracht, und zwar im Übergangsbereich zwischen dem Innenumfang des ersten Halteringes 14 und des Außenumfanges des Befestigungsabschnittes 8, an der vom Kolben 3 abgewandten Stirnseite des ersten Halteringes 14.

Anstelle zweier Laserschweißgeräte 17a, 17b kann auch lediglich ein Laserschweißgerät eingesetzt werden, das entsprechend positioniert wird.

Mit der ringförmigen Laserschweißnaht 16 lässt sich bei geringem Energieeintrag und mithin geringer Einbrenntiefe eine axial hochfeste Schweißverbindung zwischen einem jeweiligen Haltering 14, 15 und der Kolbenstange 5 erzielen. Die Werkstoffeigenschaften der Kolbenstange 5 werden dadurch nicht nachteilig beeinträchtigt. Aufgrund der konzentrischen Anordnung der Laserschweißnaht 16 mit Bezug zur Kolbenstange 5 wird überdies ein seitliches Verziehen der Kolbenstange 5 verhindert.

Die Halteringe 14, 15 bestehen aus Metall, das sich gut für eine Laserschweißbearbeitung eignet. Bevorzugt bestehen sie aus dem gleichen Material wie der Befestigungsabschnitt 8 der Kolbenstange 5.

Die Verwendung zweier gesonderter Halteringe 14, 15 zur Fixierung des Kolbens 3 macht es entbehrlich, die Kolbenstange 5 im entsprechenden Bereich mit einer Abstufung zu versehen. Wie die Figuren zeigen, können der Befestigungsabschnitt 8 und der sich daran anschließende Kolbenstangenabschnitt über den gleichen Außenquerschnitt verfügen. Auf diese Weise besteht auch die Möglichkeit, die Anbringungsposition des Kolbens 3 an der Kolbenstange 5 nach Bedarf zu variieren. Ferner besteht die besonders einfache Möglichkeit, eine Kolben-Kolbenstangen-Einheit mit durchgehender Kolbenstange zu realisieren, die gleichzeitig beide Abschlusswände des fluidtechnischen Gerätes durchsetzt.

Bei den in Figuren 3 und 4 gezeigten Alternativbauformen ist nur die eine, erste Haltefläche 12 an einem mit der Kolbenstange 5 laserverschweißten Haltering 14 ausgebildet. Die andere, zweite Haltefläche 13 ist von der dem Haltering 14 zugewandten Schulter 18 einer ringförmigen Abstufung 22 der Kolbenstange 5 gebildet. Somit verfügt die Kolbenstange 5 an dem Befestigungsabschnitt 8 über einen geringeren Durchmesser als an dem sich über die Abstufung 22 axial anschließenden Kolbenstangenabschnitt.

Bei der Herstellung der Kolben-Kolbenstangen-Einheit entfällt somit ein Schweißvorgang. Anstatt wie bei den zuvor erläuterten Ausführungsbeispielen den Kolben 3 an der an dem zweiten Haltering 15 vorgesehenen zweite Haltefläche 13 abzustützen, erfolgt hier die Abstützung an der Schulter 18. Die weiteren Verfahrensphasen laufen in der geschilderten Weise ab, wobei mittels eines Laserschweißgerätes 17b die zur kolbenstangenseitigen Befestigung des Halteringes 14 dienende Laserschweißnaht 16 erzeugt wird.

Wie aus Figuren 4 bis 6 hervorgeht, können die Halteringe 14, 15 dem Kolben 3 jeweils zur entsprechenden Axialseite hin vorgelagert sein. Sie stehen dann axial gegenüber der radial benachbarten Stirnfläche 23 des Kolbens 3 vor.

Besonders kompakte Abmessungen lassen sich allerdings realisieren, wenn der jeweilige Haltering 14, 15 in einem erweiterten Endabschnitt 24 der Durchbrechung 7 des Kolbens 3 axial versenkt aufgenommen ist. Dies ist bei den Ausführungsbeispielen der Figuren 1 bis 3 realisiert. Die axiale Tiefe des erweiterten Endabschnittes 24 ist insbesondere so gewählt, dass der zugeordnete Haltering 14, 15 mit seiner gesamten Breite darin aufgenommen wird, wobei zweckmäßigerweise vorgesehen ist, dass der betreffende Haltering 14, 15 an seiner axialen Außenseite bündig mit der benachbarten Stirnfläche 23 des Kolbens 3 abschließt.

Durch die axial versenkte Anordnung der Halteringe 14, 15 kann der Kolben 3 beim Betrieb des zugeordneten fluidtechnischen Gerätes 1 in die Endlagen fahren, ohne dass es erforderlich wäre, an der gegenüberliegenden Abschlusswand des Gehäuses 2 eine geeignete Aussparung vorzusehen. Auf diese Weise kann die Baulänge des Gehäuses 2 in vielen Fällen auf ein Minimum reduziert werden.

Besonders vorteilhaft ist eine solche Bauform zudem vor allem dann, wenn der Kolben 3, wie dies bei allen Ausführungsbeispielen der Fall ist, auf einem Befestigungsabschnitt 8 sitzt, der von einem der beiden Endabschnitte der Kolbenstange 5 gebildet ist. Bei dieser wohl am häufigsten vorkommenden Erscheinungsform der Kolben-Kolbenstangen-Einheit ist zumindest die der Stirnfläche 26 des betreffenden Endabschnittes des Kolbens 3 zugeordnete erste Haltefläche 12 von einem mit der Kolbenstange 5 verschweißten Haltering 14 gebildet, während die andere Haltefläche 13 wahlweise von einem zweiten Haltering 15 oder von der Schulter 18 einer Abstufung 22 gebildet wird.

Bei einer solchen Bauform besteht die aus Figuren 1 und 3 ersichtliche Möglichkeit, die Anordnung so zu treffen, dass die Stirnfläche 26 der Kolbenstange 5 mit der benachbarten äußeren Stirnfläche 27 des zugeordneten Halterings 14 und der sich an diesen anschließenden Stirnfläche 23 des Kolbens 3 zumindest im wesentlichen bündig verläuft.

Auch bei nicht in den Kolben 3 eintauchendem Haltering 14 ist ein zumindest im wesentlichen bündiger Verlauf der Stirnfläche 26 der Kolbenstange 5 und der äußeren Stirnfläche 27 des zugeordneten Halterings 14 möglich, wie dies exemplarisch aus Figuren 4 bis 6 ersichtlich ist.

Zweckmäßigerweise ist der Durchmesser des erweiterten Endabschnittes 24 etwas größer als der Außendurchmesser des in ihn eingreifenden Halteringes 14, 15, so dass radial im Anschluss an den betreffenden Haltering 14, 15 ein diesen Haltering 14, 15 konzentrisch umschließender Ringspalt 39 verbleibt. Auf diese Weise wird die beim Schweißen entstehende Wärme nicht direkt in das Kolbenmaterial eingeleitet, was vor allem dann von Vorteil ist, wenn es sich bei dem entsprechenden Material um hitzeempfindliches Material wie Kunststoff handelt.

Die Laserschweißnaht ergibt sich durch miteinander verschmolzene Bestandteile des Materials der Kolbenstange 5 und des angeschweißten Halteringes 14 bzw. 15. In diesem Zusammenhang ist es von Vorteil, wenn als Halteringe 14, 15 Stanzteile eingesetzt werden, die an einer Stirnseite ihres Innenumfanges über einen vorzugsweise ringförmig umlaufenden Grat 28 verfügen (Figur 6). Wird das Stanzteil bei der Herstellung der Kolben-Kolbenstangen-Einheit 6 gemäß Pfeil 32 auf den Befestigungsabschnitt 8 der Kolbenstange 5 aufgeschoben, orientiert man den Haltering 14 so, dass sich der Grat 28 an der vom Kolben 3 abgewandten Axialseite befindet. Dies ist die Stelle, an der die Laserschweißnaht 16 erzeugt wird, wobei durch den Schweißvorgang der Grat 28 aufgeschmolzen wird und somit zumindest einen Teil des Materials der Laserschweißnaht 16 bildet.

Da sich die Laserschweißverbindung nicht auf den Kolben 3 bezieht, ist zwischen dem Kolben 3 und der Kolbenstange 5 zweckmäßigerweise noch mindestens eine ringförmige Dichtung 33 angeordnet, die die Kolbenstange 5 konzentrisch umschließt und die im späteren Einsatz einen Fluidübertritt zwischen den beiden Arbeitskammern 4a, 4b zwischen dem Kolben 3 und der Kolbenstange 5 hindurch verhindert. Bei den Ausführungsbeispielen befindet sich die Dichtung 33 in einer ringförmigen Vertiefung am Innenumfang der zentralen Durchbrechung 7.

Bei den Ausführungsbeispielen der Figuren 4 bis 6 verfügt der Kolben 3, zumindest in dem die Kolbenstange 5 unmittelbar umschließenden Bereich, über einen aus Metall bestehenden Kolbenkörper 34. Der Kolbenkörper 34 hat daher eine sehr hohe Festigkeit. Die Halteflächen 12, 13 wirken direkt auf den metallischen Kolbenkörper 34 ein.

Beim Ausführungsbeispiel der Figuren 1 bis 3 hingegen besteht der Kolbenkörper 34 aus Kunststoffmaterial und hat folglich eine geringere Festigkeit als Metall wie Stahl oder Aluminium. Daher ist hier zur Bildung der zentralen Durchbrechung 7 ein metallisches, zweckmäßigerweise rohrförmig ausgebildetes Stützteil 35 vorgesehen, das zumindest radial außen von dem aus Kunststoff bestehenden Kolbenkörper 34 umschlossen ist. Der Kolbenkörper 34 ist fest mit dem Stützteil 35 verbunden, insbesondere indem er durch Spritzgießen an das Stützteil 35 angeformt ist. Letzteres verfügt beim Ausführungsbeispiel über einen ringförmigen Radialvorsprung 36, der von radial innen her formschlüssig in den Kolbenkörper 34 eingreift, so dass zwischen diesen beiden Komponenten eine problemlose axiale Kraftübertragung möglich ist.

Die beiden Halteflächen 12, 13 beaufschlagen bei diesen Ausführungsbeispielen die einander entgegengesetzten Stirnflächen des Stützteils 35, so dass letzteres axial unbeweglich eingespannt ist, was letztlich eine sichere Fixierung des gesamten Kolbens 3 zur Folge hat.

Ein zusätzlicher Kontakt der Halteflächen 12, 13 mit dem Kunststoffmaterial des Kolbenkörpers 34 ist möglich, weil das Stützteil 35 aufgrund seiner höheren Festigkeit ein Zerquetschen verhindert. Allerdings ist es von Vorteil, wenn zwischen einem jeweiligen Haltering 14, 15 und dem aus Kunststoff bestehenden Kolbenkörper 34 ein geringer Zwischenraum vorhanden ist, der während des Schweißens einen Wärmeeintrag in das Kunststoffmaterial verhindert.

Wie aus Figuren 1 und 3 hervorgeht, kann das Stützteil 35 von einem axial gestauchten Rohrkörper gebildet sein, wobei die sich durch das Stauchen ergebende radiale Ausbeulung den Radialvorsprung 36 definiert.

Bei Bedarf kann ein Stützteil 35 mit mehreren Radialvorsprüngen zum Einsatz kommen.

Beim Ausführungsbeispiel der Figuren 1 und 3 ist der Kolben 3 ein Mehrkomponentenbauteil. Er verfügt zusätzlich zu dem Kolbenkörper 34 und dem Stützteil 35 über eine im radial außen liegenden Bereich angeformte Elastomerstruktur 37, die unter anderem die mit dem Gehäuse 2 zusammenwirkenden Dichtungen 38 sowie, bei Bedarf, an den axialen Stirnflächen vorgesehene Puffervorsprünge 42 definieren kann. Am Außenumfang des Kolbenkörpers 34 kann sich ferner ein Führungsring 43 befinden und es ist möglich, einen zur Positionserfassung dienenden, bevorzugt ringförmigen Permanentmagnetkörper 44 in den Kolbenkörper 34 einzubetten.

Die Figur 5 zeigt eine mögliche Mehrfachfunktion eines Halteringes 15. Dieser ist hier so ausgebildet, dass er auch ein Verankerungsmittel für einen zur Kolbenstange 8 koaxialen Pufferkolben 45 bildet, der im zugeordneten fluidtechnischen Gerät zu Dämpfungszwecken bei der Endlagendämpfung der Kolben-Kolbenstangen-Einheit 6 einsetzbar ist.

Der in der beschriebenen Weise mit der Kolbenstange 5 verschweißte Haltering 15 verfügt beim Ausführungsbeispiel über eine bevorzugt umlaufende radiale Hinterschneidung 46, in die sich der Pufferkolben 45 mit einem oder mehreren hakenartigen Verankerungsteilen oder anderen geeigneten Verankerungsmitteln einrasten lässt. Eine solche Rastverbindung lässt sich allerdings auch ohne Hinterschneidung realisieren, indem geeignete Verankerungsmittel des Pufferkolbens den Haltering außen umgreifen.

Abweichend von der Darstellung der Figur 5, in der der Haltering 14 außerhalb des Kolbens 3 sitzt, lässt sich die Befestigung des Pufferkolbens auch realisieren, wenn der Haltering im Kolben axial versenkt angeordnet ist.

Ein solcher Pufferkolben 45 kann zu beiden Seiten des Kolbens 3 am dort jeweils vorhandenen Haltering 14, 15 fixiert werden.

## Patentansprüche

1. Kolben-Kolbenstangen-Einheit für ein fluidtechnisches Gerät wie ein Arbeitszylinder oder ein Stoßdämpfer oder dergleichen, wobei der Kolben (3) mit einer zentralen Durchbrechung (7) auf die Kolbenstange (5) aufgesteckt und zwischen zwei axial fest mit der Kolbenstange (5) verbundenen Halteflächen (12, 13) ausschließlich durch diese axial unbeweglich fixiert ist, **dadurch gekennzeichnet, dass** wenigstens eine der Halteflächen (12, 13) von einem auf einen einen einstückigen Bestandteil der Kolbenstange (5) bildenden außengewindelosen metallischen Befestigungsabschnitt (8) der Kolbenstange (5) aufgesteckten, innengewindelosen metallischen Haltering (14, 15) gebildet ist, der durch eine zur Kolbenstange (5) konzentrische Laserschweißnaht (16) mit der Kolbenstange (5) verschweißt ist.

2. Kolben-Kolbenstangen-Einheit nach Anspruch 1, **dadurch gekennzeichnet, dass** beide Halteflächen (12, 13) von jeweils einem mit der Kolbenstange (5) laserverschweißten Haltering (14, 15) gebildet sind.

3. Kolben-Kolbenstangen-Einheit nach Anspruch 2, **dadurch gekennzeichnet, dass** der Befestigungsabschnitt (8) und der sich daran anschließende Kolbenstangenabschnitt über den gleichen Außenquerschnitt verfügen.

4. Kolben-Kolbenstangen-Einheit nach Anspruch 1, **dadurch gekennzeichnet, dass** die eine Haltefläche (12) von einem mit der Kolbenstange (5) verschweißten Haltering (14) und die andere Haltefläche (13) von der dem Haltering (14) zugewandten Schulter (18) einer ringförmigen Abstufung (22) der Kolbenstange (5) gebildet ist.

5. Kolben-Kolbenstangen-Einheit nach einem der Ansprüche 1 bis 4, **dadurch gekennzeichnet, dass** der Befestigungsabschnitt (8) von einem Endabschnitt der Kolbenstange (5) gebildet ist, wobei wenigstens die der Stirnfläche (26) dieses Endabschnittes zugeordnete Haltefläche (12) von einem mit der Kolbenstange (5) verschweißten Haltering (14) gebildet ist.

6. Kolben-Kolbenstangen-Einheit nach Anspruch 5, **dadurch gekennzeichnet, dass** der der Stirnfläche (26) des Endabschnittes der Kolbenstange (5) zugeordnete Haltering (14) zumindest in etwa bündig mit dieser Stirnfläche (26) abschließt.

7. Kolben-Kolbenstangen-Einheit nach einem der Ansprüche 1 bis 6, **dadurch gekennzeichnet, dass** mindestens ein Haltering (14, 15) in einem erweiterten Endabschnitt (24, 25) der Durchbrechung (7) des Kolbens (3) axial versenkt angeordnet ist.

8. Kolben-Kolbenstangen-Einheit nach Anspruch 7, **dadurch gekennzeichnet, dass** der Haltering (14, 15) axial vollständig versenkt im zugeordneten erweiterten Endabschnitt (24) aufgenommen ist und außen zweckmäßigerweise bündig mit der benachbarten Stirnfläche (23) des Kolbens (3) abschließt.

9. Kolben-Kolbenstangen-Einheit nach Anspruch 7 oder 8, **dadurch gekennzeichnet, dass** radial zwischen dem in einem erweiterten Endabschnitt (24) angeordneten Haltering (14, 15) und dem Kolben ein Ringspalt (39) vorhanden ist.

10. Kolben-Kolbenstangen-Einheit nach einem der Ansprüche 1 bis 9, **dadurch gekennzeichnet, dass** mindestens ein Haltering (14, 15) als Verankerungsmittel für einen zur Kolbenstange (5) koaxialen, im fluidtechnischen Gerät zu Dämpfungszwecken einsetzbaren Pufferkolben (45) ausgebildet ist.

11. Kolben-Kolbenstangen-Einheit nach einem der Ansprüche 1 bis 10, **dadurch gekennzeichnet, dass** mindestens ein Haltering (14, 15) als Stanzteil ausgebildet ist.

12. Kolben-Kolbenstangen-Einheit nach Anspruch 11, **dadurch gekennzeichnet, dass** das als Haltering (14, 15) eingesetzte Stanzteil vor dem Verschweißen über einen beim Stanzen hervorgerufenen Grat (28) an einer Stirnseite des Innenumfanges verfügt, der zumindest einen Teil des Materials der Laserschweißnaht (16) bildet.

13. Kolben-Kolbenstangen-Einheit nach einem der Ansprüche 1 bis 12, **dadurch gekennzeichnet, dass** der Kolben (3) einen aus Kunststoffmaterial bestehenden Kolbenkörper (34) aufweist, der ein die Durchbrechung (7) definierendes metallisches Stützteil (35) radial außen umschließt, wobei die von mindestens einem Haltering (14, 15) gebildeten Halteflächen (12, 13) von axial entgegengesetzten Seiten her an dem metallischen Stützteil (35) anliegen.

14. Kolben-Kolbenstangen-Einheit nach Anspruch 13, **dadurch gekennzeichnet, dass** das Stützteil (35) rohrförmig ausgebildet ist.

15. Kolben-Kolbenstangen-Einheit nach Anspruch 14, **dadurch gekennzeichnet, dass** das Stützteil (35) mindestens einen formschlüssig in den Kolbenkörper (34) eingreifenden Radialvorsprung (36) aufweist.

16. Kolben-Kolbenstangen-Einheit nach Anspruch 15, **dadurch gekennzeichnet, dass** das Stützteil (35) von einem zur Bildung des ringförmigen Radialvorsprunges (36) axial gestauchten Rohrkörper gebildet ist.

17. Kolben-Kolbenstangen-Einheit nach einem der Ansprüche 1 bis 16, **dadurch gekennzeichnet, dass** der mindestens eine Haltering (14, 15) aus dem gleichen Metallmaterial besteht wie der Befestigungsabschnitt (8) der Kolbenstange.

## Claims

1. Piston and piston rod assembly for a fluid power device such as an operating cylinder, a shock absorber or the like, wherein the piston (3) is pushed onto the piston rod (5) using a central aperture (7) and is immovably located axially between and exclusively by two retaining surfaces (12, 13) permanently joined to the piston rod (5), **characterised in that** at least one of the retaining surfaces (12, 13) is represented by a metallic retaining ring (14, 15) without a female thread pushed onto a metallic mounting section (8) of the piston rod (5) without a male thread, which forms an integral part of the piston rod (5), said retaining ring being welded to the piston rod (5) by means of a laser weld (16) concentric with the piston rod (5).

2. Piston and piston rod assembly according to claim 1, **characterised in that** both retaining surfaces (12, 13) are represented by retaining rings (14, 15) laser-welded to the piston rod (15).

3. Piston and piston rod assembly according to claim 2, **characterised in that** the mounting section (8) and the adjoining piston rod section have the same external cross-section.

4. Piston and piston rod assembly according to claim 1, **characterised in that** one retaining surface (12) is represented by a retaining ring (14) welded to the piston rod (5), while the other retaining surface (13) is represented by the shoulder (18) of an annular step (22) of the piston rod (5), which faces the retaining ring (14).

5. Piston and piston rod assembly according to any of claims 1 to 4, **characterised in that** the mounting section (8) is represented by an end section of the piston rod (5), at least the retaining surface (12) assigned to the end face (26) of said end section being represented by a retaining ring (14) welded to the piston rod (5).

6. Piston and piston rod assembly according to claim 5, **characterised in that** the retaining ring (14) assigned to the end face (26) of the end section of the piston rod (5) is at least approximately flush with said end face (26).

7. Piston and piston rod assembly according to any of claims 1 to 6, **characterised in that** at least one retaining ring (14, 15) is axially recessed into an expanded end section (24, 25) of the aperture (7) of the piston (3).

8. Piston and piston rod assembly according to claim 7, **characterised in that** the retaining ring (14, 15) is completely recessed axially into the associated expanded end section (24) and expediently flush externally with the adjacent end face (23) of the piston (3).

9. Piston and piston rod assembly according to claim 7 or 8, **characterised in that** an annular gap (39) is provided radially between the retaining ring (14, 15) located in an expanded end section (24) and the piston.

10. Piston and piston rod assembly according to any of claims 1 to 9, **characterised in that** at least one retaining ring (14, 15) is designed as anchoring means for a puffer piston (45) coaxial with the piston rod (5), which is used for damping purposes in the fluid power device.

11. Piston and piston rod assembly according to any of claims 1 to 10, **characterised in that** at least one retaining ring (14, 15) is designed as a stamped part.

12. Piston and piston rod assembly according to claim 11, **characterised in that** the stamped part used as a retaining ring (14, 15) has, before the welding process, a burr (28) caused by stamping at one end face of the inner circumference, which forms at least part of the material of the laser weld (16).

13. Piston and piston rod assembly according to any of claims 1 to 12, **characterised in that** the piston (3) comprises a piston body (34) made of a plastic material, which radially encloses externally a metallic support part (35) defining the aperture (7), the retaining surfaces (12, 13) represented by at least one retaining ring (14, 15) bearing against the metallic support part (35) from axially opposite sides.

14. Piston and piston rod assembly according to claim 13, **characterised in that** the support part (35) is tubular in design.

15. Piston and piston rod assembly according to claim 14, **characterised in that** the support part (35) has at least one radial projection (36) positively engaging the piston body (34).

16. Piston and piston rod assembly according to claim 15, **characterised in that** the support part (35) is represented by an axially swaged tubular body to form an annular radial projection (36).

17. Piston and piston rod assembly according to any of claims 1 to 16, **characterised in that** the at least one retaining ring (14, 15) is made of the same metal material as the mounting section (8) of the piston rod.

## Revendications

1. Unité comprenant un piston et une tige de piston pour un appareil fluidique comme un cylindre moteur ou un absorbeur de chocs ou similaires, le piston (3) étant emboîté par un perçage central (7) sur la tige de piston (5) et étant fixé entre deux surfaces de maintien (12, 13) solidement reliées avec la tige de piston (5) exclusivement par des dernières, de façon non mobile en direction axiale, **caractérisée en ce qu'**au moins l'une des surfaces de maintien (12, 13) est formée par une bague de maintien métallique (14, 15) sans taraudage emboîtée sur un tronçon de fixation métallique sans filetage (8) de la tige de piston formant un élément monobloc de la tige de piston (5), qui est soudé sur la tige de piston (5) par une soudure laser concentrique (16) par rapport à la tige de piston (5).

2. Unité comprenant un piston et une tige de piston selon la revendication 1, **caractérisée en ce que** les deux surfaces de maintien (12, 13) sont formées chacune par une bague de maintien (14, 15) soudée au laser sur la tige de piston (5).

3. Unité comprenant un piston et une tige de piston selon la revendication 2, **caractérisée en ce que** le tronçon de fixation (8) et le tronçon de piston qui s'y raccorde disposent de la même section transversale extérieure.

4. Unité comprenant un piston et une tige de piston selon la revendication 1, **caractérisée en ce que** l'une des surfaces de maintien (12) est formée par une bague de maintien (14) soudée sur la tige de piston (5) et **en ce que** l'autre surface de maintien (13) est formée par l'épaulement (18) dirigé vers la bague de maintien (14) d'un échelonnement annulaire (22) de la tige de piston (5).

5. Unité comprenant un piston et une tige de piston selon l'une quelconque des revendications 1 à 4, **caractérisée en ce que** le tronçon de fixation (8) est formé par un tronçon d'extrémité de la tige de piston (5), au moins la surface de maintien (12) associée à la surface frontale (26) de ce tronçon d'extrémité étant formée par une bague de maintien (14) soudée sur la tige de piston (5).

6. Unité comprenant un piston et une tige de piston selon la revendication 5, **caractérisée en ce que** la bague de maintien (14) associée à la surface frontale (26) du tronçon d'extrémité de la tige de piston (5) se raccorde au moins approximativement à fleur sur cette surface frontale (26).

7. Unité comprenant un piston et une tige de piston selon l'une quelconque des revendications 1 à 6, **caractérisée en ce qu'**au moins une bague de maintien (14, 15) est disposée en direction axiale dans un tronçon d'extrémité élargi (24, 25) du perçage (7) du piston (3).

8. Unité comprenant un piston et une tige de piston selon la revendication 7, **caractérisée en ce que** la bague de maintien (14, 15) est logée en direction axiale de façon complètement noyée dans le tronçon d'extrémité élargi associé (24) et à qu'à l'extérieur, elle se raccorde opportunément à fleur de la surface frontale voisine (23) du piston (3).

9. Unité comprenant un piston et une tige de piston selon la revendication 7 ou 8, **caractérisée en ce qu'**une fente annulaire (39) se trouve en direction radiale, entre la bague de maintien (14, 15) disposée dans un tronçon d'extrémité élargi (24) et le piston.

10. Unité comprenant un piston et une tige de piston selon l'une quelconque des revendications 1 à 9, **caractérisée en ce qu'**au moins une bague de maintien (14, 15) est conçue sous la forme d'un moyen d'ancrage pour un piston tampon (45) coaxial par rapport à la tige de piston (5), utilisable dans l'appareil fluidique à des effets d'amortissement.

11. Unité comprenant un piston et une tige de piston selon l'une quelconque des revendications 1 à 10, **caractérisée en ce qu'**au moins une bague de maintien (14, 15) est conçue sous la forme d'une pièce découpée.

12. Unité comprenant un piston et une tige de piston selon la revendication 11, **caractérisée en ce que** la pièce découpée utilisée en tant que bague de maintien (14, 15) dispose avant le soudage d'une bavure (28) due au découpage sur une surface frontale de la périphérie intérieure, qui forme au moins une partie de la matière de la soudure laser (16).

13. Unité comprenant un piston et une tige de piston selon l'une quelconque des revendications 1 à 12, **caractérisée en ce que** le piston (3) comporte un corps de piston (34) en matière plastique, qui entoure par l'extérieur en direction radiale un élément d'appui métallique (35) définissant le perçage (7), les surfaces de maintien (12, 13) formées par au moins un bague de maintien (14, 15) s'appliquant à partir de côtés opposés sur l'élément d'appui métallique (35).

14. Unité comprenant un piston et une tige de piston selon la revendication 13, **caractérisée en ce que** l'élément d'appui (35) est de forme tubulaire.

15. Unité comprenant un piston et une tige de piston selon la revendication 14, **caractérisée en ce que** l'élément d'appui (35) comporte au moins une saillie radiale (36) s'engageant par complémentarité de forme dans le corps du piston (34).

16. Unité comprenant un piston et une tige de piston selon la revendication 15, **caractérisée en ce que** l'élément d'appui (35) est formé par un corps tubulaire refoulé en direction axiale pour former la saillie radiale annulaire (36).

17. Unité comprenant un piston et une tige de piston selon l'une quelconque des revendications 1 à 16, **caractérisée en ce que** la au moins une bague de maintien (14, 15) est dans la même matière que le tronçon de fixation (8) de la tige de piston.
